(19) Europäisches Patentamt
European Patent Office
Office européen des brevets

(11) **EP 4 455 399 A1**

(12) **EUROPEAN PATENT APPLICATION**
published in accordance with Art. 153(4) EPC

(43) Date of publication:
**30.10.2024 Bulletin 2024/44**

(21) Application number: **22911286.7**

(22) Date of filing: **21.12.2022**

(51) International Patent Classification (IPC):
**D06N 3/00** *(2006.01)*          **B32B 5/26** *(2006.01)*
**D06N 3/14** *(2006.01)*

(52) Cooperative Patent Classification (CPC):
**B32B 5/26; D06N 3/00; D06N 3/14**

(86) International application number:
**PCT/JP2022/047137**

(87) International publication number:
**WO 2023/120584 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.12.2021 JP 2021211134**

(71) Applicant: **Asahi Kasei Kabushiki Kaisha Tokyo 100-0006 (JP)**

(72) Inventors:
• **SAKATA, Keiichiro**
  **Tokyo 100-0006 (JP)**
• **TADOKORO, Yoshiyuki**
  **Tokyo 100-0006 (JP)**
• **YAMAMOTO, Aguru**
  **Tokyo 100-0006 (JP)**

(74) Representative: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(54) **ARTIFICIAL LEATHER AND METHOD FOR MANUFACTURING SAME**

(57)     Provided is artificial leather which has excellent flexible texture, wear resistance, and nubuck outer surface having a dense feeling. The present invention relates to napped artificial leather containing an entangled sheet, and a polymer elastomer filled into the entangled sheet, the napped artificial leather being characterized in that: the entangled sheet has a structure of two or more layers formed from a fiber layer (A) on the front surface side of the napped artificial leather, and a scrim in contact with the fiber layer (A); the average diameter of the fibers constituting the fiber layer (A) is 2.0-7.0 $\mu$m; and when measuring porosity in the thickness direction and defining the minimum porosity in the fiber layer (A) as $\varepsilon_{Amin}$(%), the minimum porosity in the scrim as $\varepsilon_{Smin}$(%), and the maximum porosity from the position of the $\varepsilon_{Amin}$(%) to the position of the $\varepsilon_{Smin}$(%) as $\varepsilon_{A-Smax}$(%), $40\leq\varepsilon_{Amin}\leq70$, $70\leq\varepsilon_{A-Smax}\leq90$, and $\varepsilon_{Smin}$(%)$<\varepsilon_{A-Smax}$(%) are satisfied. The present invention also relates to a method for manufacturing the same.

Fig. 2

EP 4 455 399 A1

**Description**

FIELD

The present invention relates to artificial leather and to a method for producing it.

BACKGROUND

Artificial leather comprising a polymer elastomer and a nonwoven fabric formed by entangling of fibers as primary materials exhibits excellent properties that are difficult to achieve with natural leather, including easy care, functionality and homogeneity, and it is therefore suitable for use in clothing, shoes and bags, as well as for surface materials and interior materials for seats in interiors, automobiles, aircraft and railway vehicles, or clothing materials such as ribbons or patch bases.

Suede-like artificial leather having a napped outer surface is one type of artificial leather known to have a luxurious outer appearance and tactile sensation. Even more preferred artificial leather is the type known as "nubuck-like artificial leather" (from its appearance), which exhibits denser nap, short nap length and more uniform texture compared to common suede-like artificial leather.

PTL 1 describes a method for obtaining artificial leather with not only a dense structure and luxurious appearance on the surface but also excellent mechanical properties and shape stability, by using a woven fabric scrim comprising a heat-shrinkable polymer as the scrim inserted in artificial leather for reinforcement of mechanical strength, and subjecting it to a heat shrinkage step during the production process.

PTL 2 describes a method for obtaining dense artificial leather without pattern wrinkles on the surface, by a process in which a fiber web of low basis weight composed of ultrafine fibers is integrated with a knitted scrim exhibiting high heat shrinkage by carrying out hydroentangling several times.

PTL 3 describes a method for obtaining nubuck-like artificial leather exhibiting the fluffy texture of nubuck and a fine wrinkled texture similar to natural leather, by tangled integration of a body comprising layering of fiber webs composed of ultrafine fibers having a single fiber fineness of 0.0001 to 0.004 dtex.

[CITATION LIST]

[PATENT LITERATURE]

[PTL 1] Japanese Unexamined Patent Publication No. 2019-112744
[PTL 2] Japanese Unexamined Patent Publication No. 2009-185430
[PTL 3] Japanese Unexamined Patent Publication No. 2007-204863

SUMMARY

[TECHNICAL PROBLEM]

A soft hand quality is a desirable property for artificial leather. Because a softer hand quality tends to be obtained with a looser fiber density of artificial leather, excessively increasing the fiber density to obtain the appearance and tactile sensation of nubuck can cause the texture to become undesirably hard.

Another desirable property of artificial leather is abrasion resistance. One possible strategy for obtaining the appearance and tactile sensation of nubuck is to make smaller fiber diameter of the fibers composing the nonwoven fabric to increase the fiber density, but for high abrasion resistance it is preferred for the fibers of the nonwoven fabric to have large diameters.

In PTL 1, an entangled sheet containing a woven fabric scrim made of a heat-shrinkable polymer is subjected to heat shrinkage to obtain artificial leather which is dense overall, including on the outer surface. Because of its overall dense structure, however, it exhibits a paper-like or hard texture, and it cannot satisfactorily provide the soft hand quality required for artificial leather.

In PTL 2, an entangled sheet containing a highly shrinkable knitted scrim is subjected to heat shrinkage to obtain artificial leather with a dense outer surface. Because of its overall dense structure, however, it exhibits a paper-like or hard texture, and it cannot satisfactorily provide the soft hand quality required for artificial leather. In addition the basis weight of the fiber web is very low at 10 to 25 g/m$^2$, causing it to exhibit insufficient abrasion resistance.

In PTL 3, an artificial leather with a dense outer surface is obtained by artificial leather formed as a layered body comprising a fiber web composed of ultrafine fibers. However, the abrasion resistance is insufficient due to the use of ultrafine fibers of 0.0001 to 0.004 dtex.

In light of these problems of the prior art, the problem to be solved by the invention is to provide artificial leather exhibiting an excellent levels of a dense nubuck-like outer surface, a soft hand quality and abrasion resistance.

[SOLUTION TO PROBLEM]

As a result of diligent experimentation with the aim of solving this problem, the present inventors have completed this invention upon finding, unexpectedly, that the problem can be solved by artificial leather having the following features.

Specifically, the present invention provides the following.

[1] Napped artificial leather comprising an entangled sheet and a polymer elastomer filling the entangled sheet, wherein:

the entangled sheet has a construction of two or more layers composed of a fiber layer (A) on the front side of the brushed artificial leather and a scrim contacting the fiber layer (A),

the mean diameter of the fibers composing the fiber layer (A) is 2.0 $\mu$m to 7.0 $\mu$m, and when the porosity is measured in the thickness direction from the front side to the back side, the following formulas (1) to (3):

$$40 \leq \varepsilon_{Amin} \leq 70 \quad \text{formula (1)}$$

$$70 \leq \varepsilon_{A\text{-}Smax} \leq 90 \quad \text{formula (2)}$$

$$\varepsilon_{Smin} < \varepsilon_{A\text{-}Smax} \quad \text{formula (3)}$$

are satisfied, where $\varepsilon_{Amin}$ (%) is the minimum porosity of the fiber layer (A), $\varepsilon_{Smin}$ (%) is the minimum porosity of the scrim, and $\varepsilon_{A\text{-}Smax}$ (%) is the maximum porosity present from the location of $\varepsilon$Amin (%) to the location of $\varepsilon$smin (%).

[2] The artificial leather according to [1] above, wherein the k-nearest neighbor ratio value of the fiber layer (A) is 10% to 80%.

[3] The artificial leather according to [1] or [2] above, wherein the relative location of $\varepsilon_{Amin}$ as the minimum porosity of the fiber layer (A) is in the range of 20% to 95% in the thickness direction of the fiber layer (A), defining the relative location on the surface of the fiber layer (A) as 0% and the relative location at the border between the fiber layer (A) and the scrim as 100%.

[4] The artificial leather according to any one of [1] to [3] above, wherein the polymer elastomer is water-dispersible polyurethane.

[5] The artificial leather according to any one of [1] to [4] above, wherein the entangled sheet is composed of polyester fibers.

[6] The artificial leather according to any one of [1] to [5] above, wherein the entangled sheet has a structure with three layers comprising a fiber layer (A), a scrim contacting the fiber layer (A), and a fiber layer (B) contacting the scrim.

[7] A method for producing napped artificial leather according to any one of [1] to [6] above, the method comprising the following steps:

(1) a step of forming a fiber web (A') from fibers having a mean diameter of 2.0 $\mu$m to 7.0 $\mu$m;

(2) a step of pre-hydroentangling the obtained fiber web (A') to obtain a fiber sheet (A");

(3) a step of layering at least the fiber sheet (A") and scrim and integrating them by main hydroentangling to obtain an entangled sheet;

(4) optionally, a step of napping treatment of the outer surface of the obtained fiber sheet;

(5) a step of filling the obtained entangled sheet with a polymer elastomer to obtain a sheet material;

(6) a step of napping the outer surface of the sheet material obtained in step (5), when step (4) has not been carried out, or otherwise carrying out step (4) for additional napping treatment of the outer surface of the sheet; and

(7) a step of dyeing the obtained sheet material.

[8] The method according to [7] above, wherein the water pressure for pre-hydroentangling in step (2) is 2 MPa to 4.5 MPa.

[ADVANTAGEOUS EFFECTS OF INVENTION]

According to the invention it is possible to produce artificial leather exhibiting excellent levels of a dense nubuck-like outer surface, a soft hand quality and abrasion resistance.

BRIEF DESCRIPTION OF DRAWINGS

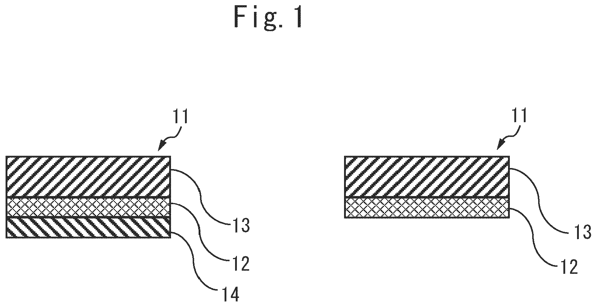

Fig. 1 is a conceptual drawing showing an example of the construction of artificial leather. Fiber layer (B) indicated as reference numeral 14 is optional.
Fig. 2 is a schematic diagram for porosity of artificial leather.
Fig. 3 is a conceptual drawing illustrating how the mean diameter of the fibers composing the fiber layer (A) is determined.
Fig. 4 is a pair of images showing manual marking of each single fiber cross-section in a prescribed image region, in order to determine the single fiber cross-sectional k-nearest neighbor ratio value (%) for a cross-section in the thickness direction.

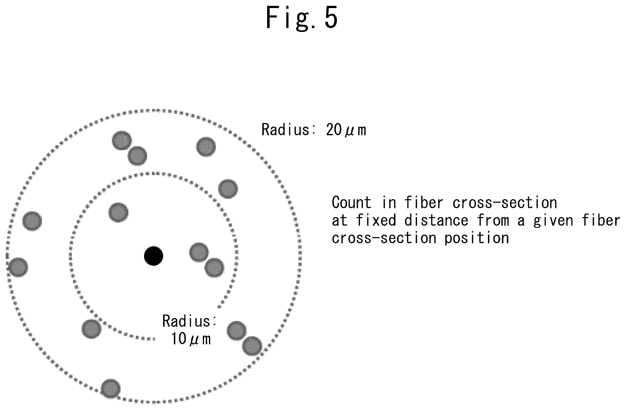

Fig. 5 is a conceptual drawing illustrating how to determine the single fiber cross-sectional k-nearest neighbor ratio value (%) for a cross-section in the thickness direction.
Fig. 6 is an illustration showing the sampling locations in a sample.

DESCRIPTION OF EMBODIMENTS

Embodiments of the invention will now be explained in detail with the understanding that the invention is not limited to the embodiments. Unless otherwise specified, the values mentioned throughout the present disclosure are values obtained by the methods described herein under "Examples" or methods known to be equivalent to them by those skilled in the art.

<Artificial leather>

One embodiment of the invention is napped artificial leather comprising an entangled sheet and a polymer elastomer filling the entangled sheet, wherein:

the entangled sheet has a construction of two or more layers composed of a fiber layer (A) on the front side of the napped artificial leather and a scrim contacting the fiber layer (A),
the mean diameter of the fibers composing the fiber layer (A) is 2.0 $\mu$m to 7.0 $\mu$m, and when the porosity is measured in the thickness direction from the front side to the back side, the following formulas (1) to (3):

$$40 \leq \varepsilon_{Amin} \leq 70 \quad \text{formula (1)}$$

$$70 \leq \varepsilon_{A\text{-}Smax} \leq 90 \quad \text{formula (2)}$$

$$\varepsilon_{Smin} < \varepsilon_{A\text{-}Smax} \quad \text{formula (3)}$$

are satisfied, where $\varepsilon_{Amin}$ (%) is the minimum porosity of the fiber layer (A), $\varepsilon_{Smin}$ (%) is the minimum porosity of the scrim, and $\varepsilon_{A\text{-}Smax}$ (%) is the maximum porosity present from the location of $\varepsilon_{Amin}$ (%) to the location of $\varepsilon_{Smin}$ (%).

Throughout the present specification, "artificial leather" is that defined according to the Household Goods Quality Labeling Law as "leather comprising a special nonwoven fabric (mainly a fiber layer having a random three-dimensional spatial structure, impregnated with a polyurethane (PU) resin or a polymer elastomer of similar flexibility) as the base material". In the definition according to JIS-6601, artificial leather is classified as being "smooth", having the silver surface appearance of leather, or "napped" having a leather nubuck, suede or velour outer appearance, and the artificial leather of the embodiment is classified as being "napped" (that is, "napped" artificial leather having a napped-style outer appearance). A napped appearance can be formed by buffing treatment (napping treatment) of the outer surface of the fiber layer (A) (the front side) using sandpaper or the like. For the purpose of the present specification, the outer surface of artificial leather, the outer surface of the fiber layer (A), the outer surface of the fiber sheet and the outer surface of the laminated sheet, each refer to the surface that is externally exposed when the artificial leather is used (the surface that contacts with the human body, in the case of a chair, for example). According to one aspect, for napped artificial leather, the outer surface of the fiber layer (A) has napped or standing fibers produced by buffing, for example.

The artificial leather has a construction with two or more layers composed of at least the fiber layer (A) and a scrim contacting the fiber layer (A). By having a construction with two or more layers including a scrim, the artificial leather has high mechanical properties, and especially high tear strength and tensile strength. The artificial leather may also be constructed with 3 layers, including a fiber layer (B) forming the back side, in addition to the fiber layer (A) and the scrim. If the structure is a three-layer structure comprising the fiber layer (A), fiber layer (B) and scrim inserted between them, this will allow the fiber layer (A) and fiber layer (B) to have separate designs, and such a structure is therefore preferred from the viewpoint of free customization of the diameters and types of fibers composing each layer to match the functions and usages required for artificial leather using entangled sheets. For example, using ultrafine fibers for fiber layer (A) and flame-retardant fibers for fiber layer (B) allows both excellent surface quality and high flame retardance to be obtained. A three-layer structure comprising the fiber layer (A), the fiber layer (B) and the scrim inserted between them is also preferred from the viewpoint of helping to provide high entangling strength between the fiber layer (A) and the scrim.

[Minimum porosity $\varepsilon_{Smin}$ of scrim]

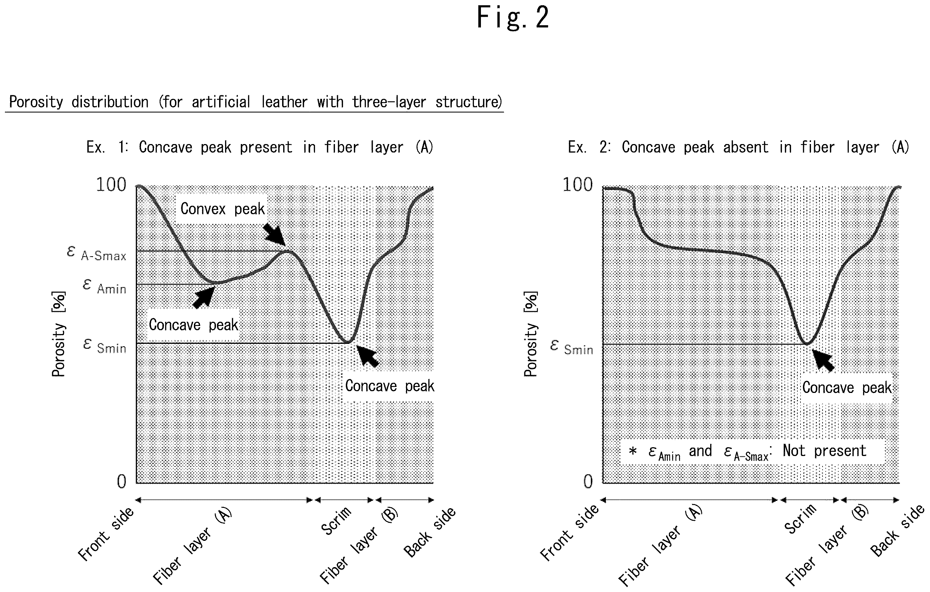

As shown in Fig. 2, the minimum porosity $\varepsilon_{Smin}$ of the scrim is the maximum concave peak porosity in the range of the scrim structure in the porosity distribution of the artificial leather. The porosity distribution of artificial leather is calculated by CT scan analysis (described below). The range of the scrim structure of the artificial leather is determined from an SEM image of a cross-section of the artificial leather in the thickness direction. The minimum porosity $\varepsilon_{Smin}$ (%) of the scrim is less than $\varepsilon_{A\text{-}Smax}$ (%). Preferably, $\varepsilon_{Smin} + 5 \leq \varepsilon_{A\text{-}Smax}$, and more preferably $\varepsilon_{Smin} + 10 \leq \varepsilon_{A\text{-}Smax}$.

[Minimum porosity $\varepsilon_{Amin}$ of fiber layer (A)]

The minimum porosity $\varepsilon_{Amin}$ in the thickness direction of the fiber layer (A) is 40% to 70%. As shown in Fig. 2, $\varepsilon_{Amin}$ is the maximum concave peak porosity in the range from the peak of the minimum porosity $\varepsilon_{Smin}$ in the scrim to the outer surface on the fiber layer (A) side. The presence of the concave peak results in sufficient entangling between the fibers in the fiber layer (A), and improved abrasion resistance. With an $\varepsilon_{Amin}$ value of 40% or greater, voids are suitably formed between the fibers forming the fiber layer (A), and the artificial leather exhibits a soft hand quality. With an $\varepsilon_{Amin}$ value of 70% or lower, the fiber layer (A) is dense and exhibits a nubuck-like luxuriant texture when touched. The $\varepsilon_{Amin}$ value is more preferably 50% to 70% and even more preferably 60% to 70%.

[Relative location of minimum porosity $\varepsilon_{Amin}$ in fiber layer (A)]

The relative location of the minimum porosity $\varepsilon_{Amin}$ of the fiber layer (A) is preferably in the range of 20% to 95% in the thickness direction of the fiber layer (A), defining the relative location on the surface of the fiber layer (A) as 0% and the relative location at the border between the fiber layer (A) and the scrim as 100%. The relative location of $\varepsilon_{Amin}$ in the fiber layer (A) of the artificial leather is determined from a cross-sectional SEM image and 3D image of the artificial leather (described below). The relative location can be adjusted by the energy (water pressure) applied as a water stream on the fiber web (A') or layered sheet during the hydroentangling step. If the relative location is 20% or greater, the fiber layer and scrim will be more integrally entangled, helping to prevent peeling between the fiber layer (A) and scrim. If the relative location is 95% or lower, the texture of the artificial leather will tend to be more soft. The relative location is more preferably 35% to 90% and even more preferably 50% to 85%.

[Maximum porosity $\varepsilon_{A\text{-}Smax}$ present from $\varepsilon_{Smin}$ to $\varepsilon_{Amin}$]

The maximum porosity $\varepsilon_{A\text{-}Smax}$ present from $\varepsilon_{Smin}$ to $\varepsilon_{Amin}$ (the maximum porosity present from the location of $\varepsilon_{Amin}$ (%) to the location of $\varepsilon_{Smin}$ (%)) (%) is the porosity of the maximum convex peak present from $\varepsilon_{Smin}$ in the scrim structure range to $\varepsilon_{Amin}$ in the fiber layer (A), in the porosity distribution of the artificial leather. The value of $\varepsilon_{A\text{-}Smax}$ is 70% to 90%. With an $\varepsilon_{A\text{-}Smax}$ value of 70% or greater, void are suitably formed between the fiber layer (A) and the scrim, and the artificial leather exhibits a soft hand quality. With an $\varepsilon_{A\text{-}Smax}$ value of 90% or lower, fibers are present in sufficient amount to hold the fiber layer (A) and the scrim, and the artificial leather exhibits sufficient abrasion resistance for use as a surface material in an automobile interior material. The $\varepsilon_{A\text{-}Smax}$ value is more preferably 70% to 85% and even more preferably 70% to 80%.

[Fibers of fiber layer]

The fibers composing the fiber layers of the artificial leather (the fiber layer (A) and the optional fiber layer (B) and additional layers) may be synthetic fibers, which includes polyester-based fibers such as polyethylene terephthalate, polybutylene terephthalate and polytrimethylene terephthalate; and polyamide-based fibers such as nylon 6, nylon 66 and nylon 12. Considering the durability required for use in the field of automobile seats, for example, polyethylene terephthalate is preferred among these from the viewpoint of excellent color fastness without yellowing of the fibers themselves when exposed to direct sunlight for long periods. More preferred, from the viewpoint of reducing environmental impact, are chemical-recycled or material-recycled polyethylene terephthalate, or polyethylene terephthalate obtained using a plant-derived material.

The mean diameter of the fibers composing the fiber layer (A) of the artificial leather is 2.0 $\mu$m to 7.0 $\mu$m. With a mean diameter of 2.0 $\mu$m or greater, voids are suitably formed between the fibers forming the fiber layer (A) of the artificial leather, and the $\varepsilon_{Amin}$ therefore tends to be 60% or greater. Suitable voids are also formed between the fibers composing the fiber layer (A) and the scrim during the main hydroentangling step (described below), and the $\varepsilon_{A\text{-}Smax}$ therefore tends to be 70% or greater. With a mean diameter of 7.0 $\mu$m or lower, the fibers composing the fiber layer (A) of the artificial leather are more densely tangled, and the $\varepsilon_{Amin}$ therefore tends to be 70% or lower. In addition, the fibers composing the fiber layer (A) and the scrim become more densely entangled during the main hydroentangling step (described below), and the $\varepsilon_{A\text{-}Smax}$ therefore tends to be 80% or lower. The mean diameter of the fibers composing the fiber layer (A) of the artificial leather is preferably 3.0 $\mu$m to 6.0 $\mu$m and more preferably 3.0 $\mu$m to 5.0 $\mu$m.

The fibers in the starting materials for the fiber webs used to form the fiber layers of the artificial leather (the fiber layer (A), the optional fiber layer (B) and additional fiber layers) are preferably directly spinning fibers, and ultrafine fibers extracted from fibers capable of ultrafine fiber generating. Using directly spinning fibers and ultrafine fibers extracted from fibers capable of ultrafine fiber generating will auxiliary in single fiber dispersion of the fibers in the fiber layers composing the artificial leather.

The fibers are preferably dispersed as single filaments in at least the fiber layer (A). Fibers obtained using fibers capable of ultrafine fiber generating such as sea-island composite fibers (with copolymerized polyester as the sea component and regular polyester as the island component, for example), with micronizing treatment after forming an entangled sheet with a scrim (removal of the sea component of the sea-island composite fibers by dissolving decomposition) are present as fiber bundles in the fiber layer (A) and are not dispersed as single filaments. As an example, by preparing sea-island composite staple fibers with an island component having a single fiber diameter equivalent to 0.2 dtex and 24 island/1f and forming a fiber layer (A) of the sea-island composite staple fibers, and then forming an entangled sheet with a scrim by needle punching treatment, filling the entangled composite with a PU resin and dissolving or decomposing the sea component, it is possible to obtain fibers with a single fiber diameter equivalent to 0.2 dtex. In this case the single filaments are present in the fiber layer (A) in a state of fiber bundles with 24 per bundle (equivalent to 4.8 dtex in the bundled state).

When it is stated throughout the present specification that the fibers are "dispersed as single filaments", it means that the fibers do not form fiber bundles obtained by removal of the sea component of sea-island composite fibers by dissolution or decomposition, for example. When the fiber layer (A) is composed of fibers dispersed as single filaments it is easier to obtain excellent surface smoothness, for example, having uniform naps when the outer surface of the fiber layer (A) has been napped by buffing treatment, and resistance to formation of fiber balls known as "pilling" on the outer surface due to abrasion, even with a relatively low adhesion rate of the PU resin, and therefore artificial leather with more excellent surface quality and abrasion resistance can be obtained. Having the fibers dispersed as single filaments also tends to result in uniform narrow gaps between the fibers, thus providing satisfactory abrasion resistance even though the PU resin is adhering in a micronized form. The method of dispersing the fibers as single filaments may be a method of using a papermaking method to form a fiber web of the ultrafine fibers produced by direct spinning, or a method of dissolving or decomposing the sea component of a fiber sheet or entangled sheet fabricated with sea-island composite fibers to generate ultrafine fiber bundles, and then carrying out the aforementioned water punching dispersion treatment on the ultrafine fiber bundle surfaces to promote formation of single filaments of the ultrafine fiber bundles.

The fibers in a fiber layer other than the fiber layer (A) of the fiber layers composing the entangled sheet, optionally, may be or may not be dispersed as single filaments, but according to a preferred aspect, layers other than the fiber layer (A) are also composed of fibers dispersed as single filaments. The fibers composing layers other than the fiber layer (A) are preferably dispersed as single filaments from the viewpoint of forming a uniform thickness of the artificial leather using the entangled sheet and improving the working precision, and also of stabilizing the quality.

When the entangled sheet has a two-layer structure with a fiber layer (A) and scrim, the basis weight of the fiber web (A') of the fiber layer (A) is preferably 10 g/m$^2$ to 200 g/m$^2$, more preferably 30 g/m$^2$ to 170 g/m$^2$ and even more preferably 60 g/m$^2$ to 170 g/m$^2$, from the viewpoint of mechanical strength including abrasion resistance. The basis weight of the scrim is preferably 20 g/m$^2$ to 150 g/m$^2$, more preferably 20 g/m$^2$ to 130 g/m$^2$ and even more preferably 30 g/m$^2$ to 110 g/m$^2$ from the viewpoint of mechanical strength and entangling between the fiber layers and scrim. The basis weight of the artificial leather comprising a PU resin impregnated in an entangled sheet composed of the two layers of fiber layer (A) and scrim is preferably 50 g/m$^2$ to 550 g/m$^2$, more preferably 60 g/m$^2$ to 400 g/m$^2$ and even more preferably 70 g/m$^2$ to 350 g/m$^2$.

When the entangled sheet has a three-layer structure with a fiber layer (A), scrim and fiber layer (B), the basis weight of the fiber web (A') of the fiber layer (A) is preferably 10 g/m$^2$ to 200 g/m$^2$, more preferably 30 g/m$^2$ to 170 g/m$^2$ and even more preferably 60 g/m$^2$ to 170 g/m$^2$, from the viewpoint of mechanical strength including abrasion resistance. The basis weight of the fiber web (B') of the fiber layer (B) is preferably 10 g/m$^2$ to 200 g/m$^2$ and more preferably 20 g/m$^2$ to 170 g/m$^2$, from the viewpoint of cost and facilitated production. The basis weight of the scrim is preferably 20 g/m$^2$ to 150 g/m$^2$, more preferably 20 g/m$^2$ to 130 g/m$^2$ and even more preferably 30 g/m$^2$ to 110 g/m$^2$ from the viewpoint of mechanical strength and entangling between the fiber layers and scrim. The basis weight of the artificial leather comprising a PU resin impregnated in an entangled sheet composed of the three-layer structure of fiber layer (A), scrim and fiber layer (B) is preferably 60 g/m$^2$ to 750 g/m$^2$, more preferably 80 g/m$^2$ to 570 g/m$^2$ and even more preferably 70 g/m$^2$ to 520 g/m$^2$.

[k-nearest neighbor ratio value]

The k-nearest neighbor ratio value (k = 9, radius r = 20 $\mu$m) between cross-sections of the single fibers forming the fiber layer (A) in a cross-section of the artificial leather in the thickness direction is preferably 10% to 80%. The k-nearest neighbor ratio value (k = 9, radius r = 20 $\mu$m) is an index of the compactness of single filaments.

The specific measuring method used will be described below, but the k-nearest neighbor algorithm is a method where the decision boundary is the kth nearest radius in Euclidean distance for k single fiber cross-sections near one arbitrary single fiber cross-section, and for this embodiment an SEM image is taken, and it is determined whether or not the k = 9th nearest single fiber cross-section is present within the distance of a 20 $\mu$m radius from the approximate center of one arbitrary single fiber cross-section. This is determined for all of the single fiber cross-sections in a single SEM image, and the single fiber cross-section k = 9 nearest neighbor ratio value (%) is calculated by the following formula:

Single fiber cross-section (k = 9) nearest neighbor ratio value (%) = {(Number of single fiber cross-sections where k = 9th nearest single fiber cross-section is present within distance of 20 $\mu$m radius from approximate center of single fiber cross-section)/(total number of single fiber cross-sections within one SEM image)} $\times$ 100.

If the k-nearest neighbor ratio value (k = 9, radius r = 20 $\mu$m) between cross-sections of the single fibers forming the fiber layer (A) in the cross-section of the artificial leather in the thickness direction is 10% or greater, the single filaments will exist in a suitably aggregated state, resulting in more dense fibers on the outer surface of the artificial leather and tending to produce artificial leather with a nubuck-like feel. If the k-nearest neighbor ratio value (k = 9, radius r = 20 $\mu$m) is 80% or lower, on the other hand, the single filaments will be suitably dispersed with sufficient entangling between the fibers, thus helping to provide sufficient abrasion resistance. The k-nearest neighbor ratio value (k = 9, radius r = 20 $\mu$m) is preferably 20% to 70% and more preferably 30% to 60%.

[Scrim]

The scrim may be a woven or knitted fabric, for example, which is preferably made of fibers of a polymer of the same type as the fibers composing the fiber layer (A), from the viewpoint of obtaining the same color by dyeing. If the fibers of the fiber layer (A) are polyester-based, for example, the fibers of the scrim are also preferably polyester-based, and when the fibers of the fiber layer (A) are polyamide-based, the fibers of the scrim are also preferably polyamide-based. For a knitted fabric scrim, it is preferably a single knit of 22-gauge to 28-gauge. A woven fabric scrim can exhibit higher dimensional stability and strength than a knitted fabric. The woven fabric texture may be a plain weave, twill weave or satin weave, but is preferably a plain weave from the viewpoint of cost and entangling properties.

The yarn composing the woven fabric may be monofilament or multifilament yarn. The single fiber fineness of the yarn is preferably 5.5 dtex or smaller to more easily obtain flexible artificial leather using an entangled sheet. The form of the yarn composing the woven fabric may be multifilament gray yarn of polyester or polyamide, or false twisted finished yarn with added twisting of 0 to 3000 T/m. When multifilaments are used they may be common ones, and are preferably 33 dtex/6f, 55 dtex/24f, 83 dtex/36f, 83 dtex/72f, 110 dtex/36f, 110 dtex/48f, 167 dtex/36f or 166 dtex/48f polyester or polyamide, for example. The yarn composing a woven fabric may consist of multifilament long fibers. The woven density of the yarn in a woven fabric is preferably 30/inch to 150/inch and more preferably 40/inch to 100/inch from the viewpoint of obtaining artificial leather that is softness with excellent mechanical strength. In order to obtain satisfactory mechanical strength and suitable texture, the basis weight of the woven fabric is preferably 20 g/m$^2$ to 150 g/m$^2$. The presence or absence of false twisting, the number of twists, the multifilament single fiber fineness and woven density for a woven fabric also contribute to the entangling properties with the constituent fibers of the fiber layer (A), and to the mechanical properties including softness, seam strength, tearing strength, tensile strength and elongation and stretchability of the artificial leather, and they may be selected as appropriate for the desired physical properties and intended use.

[Polymer elastomer]

The polymer elastomer composing the artificial leather is preferably a polyurethane (PU) resin. The PU resin used may be a solvent-type PU resin having the PU resin dissolved in an organic solvent such as N,N-dimethylformamide, or a water-dispersed PU resin having the PU resin emulsified with an emulsifying agent and dispersed in water. For this embodiment a water-dispersed PU resin is preferred from the viewpoint of facilitating filling of the PU resin into the entangled sheet in a fine form, of helping to provide the performance required for artificial leather, including texture and mechanical properties even when adhering in small amounts, and of lowering the environmental impact since the use of an organic solvent is not necessary. Since the water-dispersed PU resin can be impregnated into an entangled sheet in the form of a dispersion with the PU resin dispersed with the desired particle size, the particle size can be controlled to satisfactorily manage the manner in which the PU resin fills the entangled sheet.

The water-dispersed PU resin used may be a self-emulsifiable PU resin containing hydrophilic groups within the PU molecules, or a forced-emulsified PU resin in which the PU resin has been emulsified with an external emulsifying agent.

A crosslinking agent may also be used with the water-dispersed PU resin in order to improve the durability, including resistance to moist heat, abrasion resistance and hydrolysis resistance. A crosslinking agent is also preferably added to improve the durability during jet dyeing, reduce loss of the fibers and obtain excellent surface quality. The crosslinking agent may be an external crosslinking agent added as an addition component to the PU resin, or it may be a reactive group-introducing internal crosslinking agent that can produce a crosslinked structure beforehand within the PU resin structure.

Since the water-dispersed PU resin used in the artificial leather will generally have a crosslinked structure to provide dyeing durability, it tends to be poorly soluble in organic solvents such as N,N-dimethylformamide. Therefore when observing a cross-section with an electron microscope, for example, if a resinous substance remains which lacks the form of the fibers after immersion of the artificial leather in N,N-dimethylformamide at room temperature for 12 hours to dissolve the PU resin, the resinous substance can be considered to be the water-dispersed PU resin.

From the viewpoint of softness and homogeneity required for artificial leather, the PU resin is preferably filled using a PU resin dispersion, and the mean primary particle size of the PU resin in the dispersion is preferably 0.1 $\mu$m to 0.8 $\mu$m. The mean primary particle size is the value obtained by measurement of the PU resin dispersion using a laser diffraction particle size distribution analyzer ("LA-920" by Horiba, Ltd.). If the mean primary particle size of the PU resin is 0.1 $\mu$m or greater, then the force with which the PU resin holds the fibers together in the entangled sheet (binding force) will be satisfactory, allowing artificial leather with excellent mechanical strength to be obtained. Limiting the mean primary particle size of the PU resin to 0.8 $\mu$m or smaller will inhibit aggregation and coarseness of the PU resin, which is advantageous for controlling the standard deviation of the cross-sectional PU resin area ratio to 25 or lower. If the mean primary particle size of the PU resin in the PU resin dispersion is 0.1 $\mu$m to 0.8 $\mu$m, then the fibers composing the artificial leather (front layer) will be held together at more points, allowing a soft hand quality (stiffness) and excellent mechanical strength (such as abrasion resistance) to be obtained. The mean primary particle size of the PU resin is preferably 0.1 $\mu$m to 0.6 $\mu$m and more preferably 0.2 $\mu$m to 0.5 $\mu$m.

[Solid concentration of PU resin dispersion]

As mentioned above, the PU resin is impregnated as an impregnating liquid in the form of a solution (dissolved in a solvent) or dispersion (water-dispersed). The solid concentration of the water-dispersed PU resin dispersion may be 3 wt% to 35 wt%, for example, and is preferably 4 wt% to 30 wt% and more preferably 5 wt% to 25 wt%. According to one aspect, the impregnating liquid is prepared and impregnated into the entangled sheet so that the proportion of PU resin with respect to 100 wt% of the entangled sheet is 5 wt% to 50 wt%.

The PU resin is preferably obtained by reacting a polymer diol with an organic diisocyanate and a chain extender.

Examples of polymer diols to be used include polycarbonate-based, polyester-based, polyether-based, silicone-based and fluorine-based diols, as well as copolymers of any two or more of these. From the viewpoint of hydrolysis resistance, it is preferred to use a polycarbonate-based or polyether-based diol, or a combination thereof. From the viewpoint of light fastness and heat resistance, polycarbonate-based or polyester-based diols, or their combinations, are preferred. From the viewpoint of cost competitiveness, a polyether-based or polyester-based diol, or a combination thereof, is preferred.

A polycarbonate-based diol can be produced by transesterification reaction of an alkylene glycol and a carbonic acid ester, or by reaction between phosgene or a chlorformic acid ester and an alkylene glycol.

Examples of alkylene glycols include straight-chain alkylene glycols such as ethylene glycol, propylene glycol, 1,4-butanediol, 1,5-pentanediol, 1,6-hexanediol, 1,9-nonanediol and 1,10-decanediol; branched alkylene glycols such as neopentyl glycol, 3-methyl-1,5-pentanediol, 2,4-diethyl-1,5-pentanediol and 2-methyl-1,8-octanediol; alicyclic diols such as 1,4-cyclohexanediol; and aromatic diols such as bisphenol A; used either alone or in any combinations of two or more.

Polyester-based diols include polyester diols obtained by condensation between any of various low molecular weight polyols and polybasic acids.

Examples of low molecular weight polyols include one or more selected from among ethylene glycol, 1,2-propylene glycol, 1,3-propylene glycol, 1,3-butanediol, 1,4-butanediol, 2,2-dimethyl-1,3-propanediol, 1,6-hexanediol, 3-methyl-1,5-pentanediol, 1,8-octanediol, diethylene glycol, triethylene glycol, dipropylene glycol, tripropylene glycol, cyclohexane-1,4-diol and cyclohexane-1,4-dimethanol. An addition product of an alkylene oxide with bisphenol A may also be used.

Examples of polybasic acids include one or more selected from the group consisting of succinic acid, maleic acid, adipic acid, glutaric acid, pimelic acid, suberic acid, azelaic acid, sebacic acid, dodecanedicarboxylic acid, phthalic acid, isophthalic acid, terephthalic acid and hexahydroisophthalic acid.

Examples of polyether-based diols include polyethylene glycol, polypropylene glycol, polytetramethylene glycol, and copolymer diols comprising their combinations.

The number-average molecular weight of the polymer diol is preferably 500 to 4000. The number-average molecular weight is 500 or higher and more preferably 1500 or higher to help prevent hardening of the texture. The number-average molecular weight is 4000 or lower and more preferably 3000 or lower to help maintain satisfactory strength of the PU resin.

Examples of organic diisocyanates include aliphatic diisocyanates such as hexamethylene diisocyanate, dicyclohexylmethane diisocyanate, isophorone diisocyanate and xylylene diisocyanate; and aromatic diisocyanates such as diphenylmethane diisocyanate and tolylene diisocyanate, as well as their combinations. Preferred among these from the viewpoint of light fastness are aliphatic diisocyanates such as hexamethylene diisocyanate, dicyclohexylmethane diisocyanate and isophorone diisocyanate.

Chain extenders to be used include amine-based chain extenders such as ethylenediamine and methylenebisaniline, or diol-based chain extenders such as ethylene glycol. A polyamine obtained by reacting a polyisocyanate and water may also be used as a chain extender.

The impregnating liquid containing the PU resin (such as the water-dispersed PU resin) may also contain additives such as stabilizers (such as ultraviolet absorbers and antioxidants), flame retardants, antistatic agents and pigments (such as carbon black), as necessary. The total amount of additives in the artificial leather may be 0.1 to 10.0 parts by mass, 0.2 to 8.0 parts by mass or 0.3 to 6.0 parts by mass, for example, with respect to 100 parts by mass of the PU resin. Such additives become distributed in the PU resin of the artificial leather. The values of the size of the PU resin and the mass ratio with respect to the entangled sheet mentioned herein are assumed to include the additives (when used).

<Method for producing artificial leather>

An example of a method for producing artificial leather of this embodiment will now be described.

One example of the method for producing artificial leather of the embodiment may be a method for producing napped artificial leather comprising the following steps:

(1) a step of forming a fiber web (A') from fibers having a mean diameter of 2.0 $\mu$m to 7.0 $\mu$m;
(2) a step of pre-hydroentangling the obtained fiber web (A') to obtain a fiber sheet (A");
(3) a step of layering at least the fiber sheet (A") and scrim and integrating them by main hydroentangling to obtain an entangled sheet;
(4) optionally, a step of napping treatment of the outer surface of the obtained fiber sheet;
(5) a step of filling the obtained entangled sheet with a polymer elastomer to obtain a sheet material;
(6) a step of napping the outer surface of the sheet material obtained in step (5), when step (4) has not been carried out, or otherwise carrying out step (4) for additional napping treatment of the outer surface of the sheet; and
(7) a step of dyeing the obtained sheet material.

This process may be carried out as one method for producing artificial leather. Each step will now be explained in order.

Throughout the present specification, fibers formed into a sheet by a web-forming step are referred to as "fiber web", the fiber web hydroentangled by a pre-hydroentangling step is referred to as "fiber sheet", the fiber sheet layered with a scrim and optionally an additional fiber web or fiber sheet is referred to as "layered sheet", a layered sheet hydroentangled by the main hydroentangling step is referred to as "entangled sheet", the entangled sheet filled with a polymer elastomer in the polymer elastomer filling step is referred to as "sheet material", and the color-processed sheet material is referred to as "artificial leather". The fiber layer forming the artificial leather is not limited to being a single layer. For example, artificial leather obtained using an entangled sheet with a three-layer structure comprising a fiber layer (A), a scrim contacting the fiber layer (A) and a fiber layer (B) contacting the scrim, is composed of two fiber layers separated by a scrim. When the artificial leather comprises two or more fiber layers, their respective structures are not limited to being identical. For example, by forming the fiber layer on the outer surface side with ultrafine fibers that tend to exhibit a smooth tactile sensation, and forming the fiber layer on the opposite side of the outer surface with flame-retardant fibers having thick diameters less likely to produce a smooth tactile sensation, it is possible to obtain artificial leather maintaining a smooth tactile sensation on the outer surface while exhibiting flame retardance.

[Web-forming step]

The method for producing the fiber web (A'), the optional fiber web (B') and the additional fiber webs to form each fiber layer of the artificial leather (the fiber layer (A), and the optional fiber layer (B) and additional fiber layers) may be a direct spinning method (such as a spunbond method or meltblown method), or a method of forming a fiber web with staple fibers (such as a carding method, airlauxiliary method or other dry method, or a wet method such as a papermaking method), which are all suitable. A fiber web produced using staple fibers is most preferred because it has low basis weight variation and excellent homogeneity, and tends to form uniform naps and thus improve the surface quality for artificial leather.

The fibers in the starting materials for the fiber webs used to form the fiber layers of the artificial leather (the fiber layer (A), the optional fiber layer (B) and additional fiber layers) are preferably directly spinning fibers, and ultrafine fibers extracted from fibers capable of ultrafine fiber generating. Using directly spinning fibers and ultrafine fibers extracted from fibers capable of ultrafine fiber generating will auxiliary in single fiber dispersion of the fibers in the fiber layers composing the artificial leather.

When sea-island staple fibers (SIF) are used as staple fibers, the means for forming the fibers of the fiber web preferably uses fibers capable of ultrafine fiber generating. Using fibers capable of ultrafine fiber generating can stability obtain the entangling forms of the fiber bundles.

The fiber capable of ultrafine fiber generating used may be sea-island fibers having two thermoplastic resin components with different solvent solubilities as the sea component and island component, with the island component as the ultrafine fibers, obtained by dissolving removal of the sea component with a solvent, or peelable composite fibers having two thermoplastic resin components situated alternately in a radial or multilayer manner in the fiber cross-sections and being split into ultrafine fibers by peeled splitting of the components. SIF can provide suitable voids between the island component (fibers) by removal of the sea component, and are therefore preferred for use from the viewpoint of softness and texture of the sheet material.

Sea-island fibers include sea-island composite fibers obtained by spinning the sea component and island component in mutual alignment using a sea-island compositing nozzle, and mixed spinning fibers obtained by spinning a mixture of the sea component and island component. Sea-island composite fibers are preferably used from the viewpoint of obtaining fibers of uniform size and of obtaining fibers of adequate length to contribute to the sheet material strength.

The sea component for sea-island fibers may be a copolymerized polyester obtained by copolymerizing polyethylene, polypropylene, polystyrene, sodium sulfoisophthalic acid or polyethylene glycol, or polylactic acid. For environmental considerations it is preferred to use an alkali-decomposable copolymerized polyester obtained by copolymerizing sodium sulfoisophthalic acid or polyethylene glycol, or polylactic acid, which can be decomposed without using organic solvents.

Sea-component dissolution when sea-island fibers are used is preferably carried out before the polymer elastomer filling step. Sea-component dissolution before the polymer elastomer filling step allows the fibers to be firmly held since the structure has the polymer elastomer directly adhering to the fibers, and therefore results in satisfactory abrasion resistance of the sheet material.

When a method using staple fibers is selected, the staple fiber lengths are preferably 13 mm to 102 mm, more preferably 25 mm to 76 mm and even more preferably 38 mm to 76 mm for a dry method (carding method or airlauxiliary method), and preferably 1 mm to 30 mm, more preferably 2 mm to 25 mm and even more preferably 3 mm to 20 mm for a wet method (papermaking method). For staple fibers used in a wet method (sheet forming method), for example, the aspect ratio (L/D), as the ratio of the length (L) and diameter (D), is preferably 500 to 2000 and more preferably 700 to 1500. This aspect ratio range is preferred because the dispersibility and openability of the staple fibers in the slurry of the staple fibers dispersed in water will be satisfactory during preparation of the slurry, the fiber layer strength will be satisfactory, and fiber balls known as "pilling" caused by abrasion will be less likely to be outwardly apparent since the fiber lengths are shorter than produced by a dry method, allowing the single filaments to more easily disperse. The fiber lengths of staple fibers with diameters of 4 μm, for example, are preferably 2 mm to 8 mm and more preferably 3 mm to 6 mm.

[Hydroentangling step]

The hydroentangling step in the artificial leather production process preferably comprises a pre-hydroentangling step in which only the fiber web (A') that is to form the fiber layer (A) of the artificial leather, obtained in the web-forming step, is hydroentangled to obtain fiber sheet (A"), and a main hydroentangling step in which at least the fiber sheet (A") subjected to the pre-hydroentangling treatment and a scrim are layered together and the layered sheet comprising at least two layers is integrated by hydroentangling to obtain an entangled sheet. By hydroentangling only the fiber web (A') which is to form the fiber layer (A) of the artificial leather, it is possible to obtain a sufficiently densified fiber sheet (A"), adjusting the minimum porosity $\varepsilon_{Amin}$ of the fiber layer (A) to 70% or lower. Since the main hydroentangling step, in which at least the two layers including the hydroentangled fiber sheet (A") and the scrim are layered together and integrated by hydroentangling to obtain an entangled sheet, does not require excessive water pressure for densification of the outer surface of the artificial leather, the fiber density does not overly increase near the border between the fiber layer (A) and the scrim, allowing the maximum porosity $\varepsilon_{A-Smax}$ present from $\varepsilon_{Smin}$ to $\varepsilon_{Amin}$ to be adjusted to 70% to 80%.

When the entangled sheet has a three-layer structure composed of the fiber layer (A), the scrim contacting the fiber layer (A) and the fiber layer (B) contacting with the scrim, the fiber layer (B) provided as a layered sheet is layered as a fiber sheet (B") obtained by hydroentangling only the fiber web (B'), or as the fiber web (B') without pre-hydroentangling. In other words, the fiber layer (B) provided as a layered sheet may be layered either as a fiber sheet (B") obtained by hydroentangling only the fiber web (B'), or as the fiber web (B') without pre-hydroentangling. Even when the entangled sheet has a multilayer structure comprising fiber layer (C) (optionally with additional layers) on the fiber layer (B) side in addition to the fiber layer (B), the multilayer section comprising the fiber layer (B) and the fiber layer (C) (optionally with additional layers) may be layered using the same idea as the fiber layer (B).

The method of entangling may be by cutting the sea-island fibers to predetermined fiber lengths to form staple fibers, passing them through a card and cross lapper to form a fiber web, and entangling them by hydroentangling treatment by means of a needle punching method, but hydroentangling is preferred according to one aspect.

The water pressure on the nozzle hole inflow side for hydroentangling is preferably 1 MPa to 10 MPa. A water pressure of 1 MPa or greater will facilitate sufficient entangling of the fibers, while a water pressure of 10 MPa or lower will help avoid noticeable water trajectory from remaining on the entangled surface of the tangled sheet after processing. The water pressure is more preferably 1.5 MPa to 7.5 MPa and even more preferably 2 MPa to 4.5 MPa.

The discharge hole diameter of the nozzle used in the hydroentangling step is preferably 0.15 mm to 0.30 mm. A discharge hole diameter of 0.15 mm or greater will allow discharge of water volume sufficient for tangling of the fibers. A discharge hole diameter of 0.30 mm or smaller will help avoid noticeable water trajectorys from remaining on the entangled surface of the entangled sheet after processing. The discharge hole diameter is more preferably 0.15 mm to 0.25 mm and even more preferably 0.15 mm to 0.22 mm.

In the hydroentangling step, the nozzle is preferably moved with circular motion or reciprocally in the direction perpendicular to the machine direction, for even entangling of the fibers and few water trajectorys parallel to the machine direction, as well as increased surface quality.

[Napping treatment step]

Napping treatment may be carried out to form naps on the surface of the entangled sheet or sheet material. The napping treatment may be by a method of grinding using sandpaper or a roll sander. Applying silicone as a lubricant before napping treatment allows napping treatment to be carried out easily by surface grinding, resulting in very satisfactory surface quality.

[Polymer elastomer filling step]

In this step, the polymer elastomer is dried after having been impregnated into the entangled sheet, thus filling the sheet with the polymer elastomer. According to one aspect, the polymer elastomer is preferably a water-dispersible polyurethane (PU) resin. The water-dispersed PU resin is impregnated as an impregnating liquid such as a dispersion. The concentration of the water-dispersed PU resin in the impregnating liquid may be 3 to 35 wt%, for example. According to another aspect, the impregnating liquid is prepared and impregnated into the entangled sheet so that the PU resin proportion is 5 to 50 wt% with respect to 100 wt% of the entangled sheet.

Water-dispersed PU resins are classified as forced-emulsified PU resins that are forcibly dispersed and stabilized using a surfactant, and self-emulsifiable PU resins that have a hydrophilic structure within the PU molecular structure and disperse and stabilize in water without the presence of a surfactant. While either may be used for this embodiment, forced-emulsified PU resins are preferably used from the viewpoint of imparting a heat-sensitive coagulating property as explained below.

The concentration of the water-dispersed PU resin (the content of the PU resin with respect to the water-dispersed PU resin dispersion) is preferably 3 wt% to 35 wt%, more preferably 4 wt% to 30 wt% and even more preferably 5 wt% to 30 wt%, from the viewpoint of controlling the amount of adhesion of the water-dispersed PU resin, and because a high concentration promotes aggregation of the PU resin.

The water-dispersed PU resin dispersion preferably has a heat-sensitive coagulating property. By using a water-dispersed PU resin dispersion with a heat-sensitive coagulating property it is possible to apply the PU resin evenly in the thickness direction of the entangled sheet. A heat-sensitive coagulating property is a property such that when the PU resin dispersion is heated, the PU resin dispersion loses fluidity and coagulates upon reaching a certain temperature (the heat-sensitive coagulation temperature). After the entangled sheet has been impregnated with the PU resin dispersion during production of the sheet material filled with a PU resin, it is solidified by dry heat coagulation, moist heat coagulation, hot water coagulation or a combination thereof, and dried to apply the PU resin to the entangled sheet. The method currently used in industrial production for coagulating water-dispersed PU resin dispersions that do not exhibit a heat-sensitive coagulating property is dry coagulation, but this tends to cause a migration phenomenon in which the PU resin becomes concentrated in the front layer of the sheet material, tending to result in fixing of the texture of the sheet material filled with the PU resin.

The heat-sensitive coagulation temperature of the water-dispersed PU resin dispersion is preferably 40°C to 90°C. If the heat-sensitive coagulation temperature is 40°C or higher, the storage stability of the PU resin dispersion will be satisfactory and adhesion of the PU resin onto operating machinery can be inhibited. If the heat-sensitive coagulation temperature is 90°C or lower, migration of the PU resin in the entangled sheet can be inhibited.

A heat-sensitive coagulant may be added as appropriate to adjust the heat-sensitive coagulation temperature to the range specified above. Examples of heat-sensitive coagulants include inorganic salts such as sodium sulfate, magnesium sulfate, calcium sulfate and calcium chloride, and radical reaction initiators such as sodium persulfate, potassium persulfate, ammonium persulfate, azobisisobutyronitrile and benzoyl peroxide.

The water-dispersed PU resin dispersion may be impregnated and coated onto the entangled sheet, and subjected to dry heat coagulation, moist heat coagulation, hot water coagulation or a combination of these, to coagulate the PU resin. The temperature for moist heat coagulation is preferably 40°C to 200°C, and above the heat-sensitive coagulation temperature of the PU resin. If the moist heat coagulation temperature is 40°C or higher and more preferably 80°C or higher, then it will be possible to shorten the time until coagulation of the PU resin and better inhibit its migration. If the moist heat coagulation temperature is 200°C or lower and more preferably 160°C or lower, heat degradation of the PU resin or PVA resin can be prevented. The temperature for hot water coagulation is preferably 40°C to 100°C, and above the heat-sensitive coagulation temperature of the PU resin. If the hot water coagulation temperature in hot water is 40°C or higher and more preferably 80°C or higher, then it will be possible to shorten the time until coagulation of the PU resin and better inhibit its migration. The dry coagulation temperature and drying temperature are preferably 80 to 180°C. A dry coagulation temperature and drying temperature of 80°C or higher and more preferably 90°C or higher will result in excellent productivity. If the dry coagulation temperature and drying temperature are 180°C or lower and more preferably 160°C or lower, heat degradation of the PU resin or PVA resin can be prevented.

[Dyeing step]

The artificial leather is preferably subjected to dyeing treatment to increase the sensory value (i.e. the visual effect). Dyeing may be selected according to the type of fibers composing the entangled sheet, and for example, a disperse dye may be employed for polyester-based fibers, an acid dye or gold-containing dye may be employed for polyamide-based fibers, or any combination of such dyes may be used. When a disperse dye has been used for dyeing, the dyeing may be followed by reduction cleaning. The dyeing method used may be any one commonly known in the dyeing industry. The dyeing method preferably employs a jet dyeing machine to simultaneously provide a rubbing effect while the sheet material is dyed, in order to soften the sheet material. The dyeing temperature will depend on the type of fiber but is preferably 80°C to 150°C. If the dyeing temperature is 80°C or higher and more preferably 110°C or higher it will be possible to efficiently dye the fibers. If the dyeing temperature is 150°C or lower and more preferably 130°C or lower it will be possible to prevent degradation of the PU resin.

The artificial leather dyed in this manner is preferably subjected to soaping and if necessary reduction cleaning (cleaning in the presence of a chemical reducing agent) to remove the excess dye. It is also preferred to use a dyeing auxiliary during dyeing. Using a dyeing auxiliary can increase the dyeing uniformity and reproducibility. Whether in the same bath as dyeing or after dyeing, finishing treatment may be carried out using a flexibilizer such as silicone, or an antistatic agent, water-repellent agent, flame retardant, light fastness agent or antimicrobial agent.

The artificial leather of this embodiment can be suitably used as an interior surface material with a very delicate outer appearance when used as an upholstery for furniture, chairs or wall materials, or for seats, headliners or interior for vehicle interiors of automobiles, electric railcars or aircraft, or as clothing materials used in parts of shirts, jackets, uppers or trims for shoes including casual shoes, sports shoes, men's shoes or women's shoes, or bags, belts and wallets, or even as industrial materials such as wiping cloths, abrasive cloths or CD curtains.

EXAMPLES

The present invention will now be described in greater detail by Examples and Comparative Examples, with the understanding that the invention is not limited by the Examples. The physical properties and quality of the artificial leather samples used in the Examples and Comparative Examples were evaluated by the following protocols and methods.

(1-0) Sampling Locations

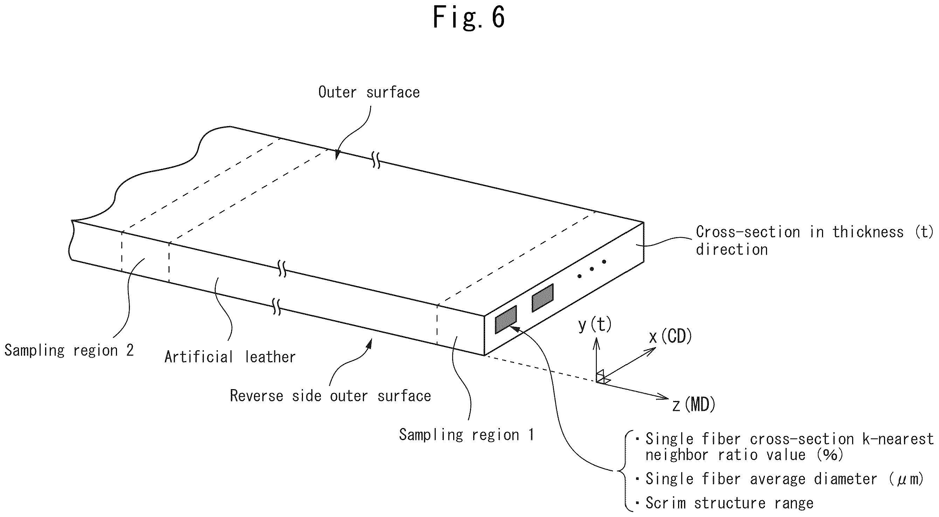

The locations for sampling are shown in Fig. 6.

First, 2 locations in the machine direction (MD) of the fiber layer (A) or the artificial leather comprising the fiber layer (A) (sampling regions 1 and 2) are cut out into strips (shown by dotted lines). For each sampling region, a cross-section was prepared in the thickness (t) direction and five locations at equal spacing in the CD perpendicular to the MD were selected from the cross-section, and the following methods were used to determine the mean diameter ($\mu$m) of the single fibers forming the fiber layer (A), the single fiber cross-sectional k-nearest neighbor ratio value (%) and the scrim structure range. Ten images each were prepared to determine the mean diameter ($\mu$m) of the single fibers forming the fiber layer (A), the single fiber cross-sectional k-nearest neighbor ratio value (%) and the scrim structure range.

(1-1) Mean diameter ($\mu$m) of single fibers forming fiber layer (A)

The mean diameter of the fibers composing the fiber layer (A) was determined by photographing one of the cross-sections of the fiber layer (A) of the artificial leather selected in (1-0) above using a scanning electron microscope (SEM, "JSM-5610" by JEOL Corp.), at a magnification of 1500x, randomly selecting 10 fibers forming the cross-section of the fiber layer (A) of the artificial leather, and measuring the diameter of the single filament cross-sections. Measurement was carried out at all of the 10 cross-sections selected in (1-0), and the arithmetic mean value for the total measurements of 100 fibers was recorded as the single filament mean diameter.

When the observational shape of a single filament cross-section is not circular, the fiber diameter is recorded as the outer circumferential distance on a straight line perpendicular to the midpoint of the maximum diameter of the single fiber cross-section.

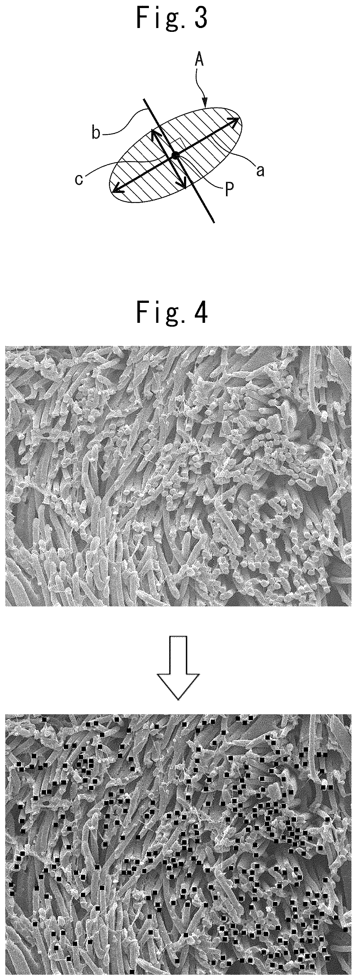

Fig. 3 is a conceptual drawing illustrating how a fiber diameter is determined. When the cross-section A of the fiber is elliptical as in Fig. 3, for example, the fiber diameter is considered to be the outer circumferential distance c on a straight line b perpendicular to the midpoint p of the maximum diameter "a" of the cross-section A in the observed image.

(1-2) Single fiber cross-sectional k-nearest neighbor ratio value (%)

The k-nearest neighbor algorithm is a method in which k number of single fiber cross-sections near an arbitrary single fiber cross-section are taken and the kth nearest radius by Euclidean distance is used as the decision boundary.

For this embodiment, using one SEM image, a region of about 250 $\mu$m $\times$ about 186 $\mu$m is photographed with 640 $\times$ 480 pixels including the lower image bar (in which case 1 pixel corresponds to ~0.40 $\mu$m $\times$ ~0.40 $\mu$m), and it is determined whether or not the k = 9th nearest single fiber cross-section is present within a distance at a 20 $\mu$m radius from the approximate center of the arbitrary single fiber cross-section. This is determined for all of the single fiber cross-sections in a single SEM image, and the single fiber cross-section k = 9th nearest neighbor ratio value (%) is calculated by the following formula:

Single fiber cross-section (k = 9) nearest neighbor ratio value (%) = {(Number of single fiber cross-sections where k = 9th nearest single fiber cross-section is present within distance of 20 $\mu$m radius from approximate center of single fiber cross-section)/(total number of single fiber cross-sections within one SEM image)} $\times$ 100.

The single fiber cross-section (k = 9) nearest neighbor ratio value is calculated as the arithmetic mean for measurements in 10 SEM images at the 10 locations selected in (1-0).

When the sample has a scrim, the observation region is the maximum depth of the fiber layer (A) of the cut surface of the conductively treated sample (i.e. the part nearest on the scrim side), and observation is with a scanning electron microscope (SEM, "JSM-5610" by JEOL Corp.), ignoring the fibers forming the scrim. When the sample does not have a scrim, observation is made with the SEM using the center section in the thickness direction of the artificial leather in the cut surface of the conductively treated sample as the center point of the observation region.

The single fiber cross-section in the SEM image may be manually marked for identification, as shown in Fig. 4. The specific procedure is as follows.

[Procedure 1]

After drawing red (R) dots on the fiber cross-sections in the SEM image (gray), the coordinates of the fiber cross-sections are calculated.

<Method in detail>

(i) OpenCV (cv2 module for Python) is used to read in the image.
(ii) Pixels with R of ≥220 and G, B ≤100 (RGB) are extracted.
(iii) For noise processing, the detected dots are passed through dilation processing (cv2.dilate with iteration = 2) and erosion processing (cv2.erode with iteration = 2).
(iv) The noise treated image is processed by cv2.connectedComponentsWithStats, and the center of gravity coordinates are obtained for the dot detected as the 3rd of the 4 results.
(v) The center of gravity coordinates are used as the location of the fiber cross-section.
(vi) The distances between specific positions on the coordinate system are calculated. Representing the coordinates of fiber cross-section A and fiber cross-section B as (Ax, Ay), (Bx and By), the two distances R are calculated as R = $\sqrt{((Ax - Bx)^2 + (Ay - By)^2)}$.

[Procedure 2]

The Euclidean distance to the kth nearest fiber cross-section is calculated for all of the fiber cross-sections (k-nearest neighbor distance: matrix distance).

<Method in detail>

(i) The distance between the coordinate of the fiber cross-section A and another cross-section is calculated.
(ii) The calculated distances are sorted in ascending order.
(iii) The kth sorted distance is used as the k-nearest neighbor distance.

[Procedure 3]

The number of cross-sections with k-nearest neighbor distance of R or less is divided by the total number of fiber cross-sections, and used as the k-nearest neighbor ratio value for the SEM image.

For a large number of SEM images, the locations of the fiber cross-sections may be determined with manual marking replaced by machine learning (deep learning) where classification is on the pixel level based on semantic segmentation using the network FCN (Fully Convolutional Networks) method (Jonathan Long, Evan Shelhamer and Trevor Darrel (2015): Fully Convolutional Networks for Semantic Segmentation. In The IEEE Conference on Computer Vision and Pattern Recognition (CVPR)), all consisting of convolution layers, and using an image containing teacher data with red (R) dots marked on the fiber cross-section (correct labels) as the learning data.

(1-3) Determining scrim structure range

The scrim structure range in the thickness direction of the artificial leather is obtained by the following method.

(i) A cut surface obtained by cutting the artificial leather in the thickness direction is photographed using a scanning electron microscope (SEM, "JSM-5610" by JEOL Corp.) at 50x magnification, to obtain an SEM image.
(ii) A line segment A is drawn along the outer surface on the fiber layer (A) side and parallel to the in-plane direction of the artificial leather.
(iii) A line segment D is drawn along the surface on the side opposite the fiber layer (A) side and parallel to the in-plane direction of the artificial leather.

(iv) Two line segments are drawn parallel to the in-plane direction of the artificial leather and contacting the fiber bundle forming the scrim, and with the furthest distance between the two line segments. Of the two line segments, the line segment near line segment A is line segment B, and the other is line segment C. In the distance between line segment A to line segment D, the relative locations of line segment C and line segment D are designated as B [%] and C [%], respectively, with line segment A as 0 [%] and line segment D as 100 [%].

(v) The relative locations B [%] and C [%] are calculated as the arithmetic mean for the measurement values of the 10 SEM images at the 10 locations selected in (1-0).

(vi) The scrim structure range is the range that the scrim occupies in relation to the thickness of the artificial leather. The relative location range B to C [%] is therefore the scrim structure range.

[Porosity distribution of artificial leather]

The porosity distribution of the artificial leather is determined by the following procedure. First, three arbitrary locations of the artificial leather mutually separated by 5 cm or greater are cut to sizes of 10 mm × 10 mm each for use as measuring samples.

(i) A 3D image of the artificial leather is taken by X-ray CT.

Apparatus: High-resolution 3D X-ray microscope Nano 3DX by Rigaku Corp.
X-ray target: Cu
X-ray tube voltage/tube current: 40 kV/30 mA
Exposure time: 12 sec
Spatial resolution: 1.08 $\mu$m/pix
Observation region: Region containing the entire thickness of the cross-section in the thickness direction of the sample. The center point is the center of the thickness in the cross-section in the thickness direction.

(ii) The photograph circular columnar 3D image is rotated so that the plane containing the x-axis and z-axis is parallel to the cross-section in the thickness direction and the plane containing the x-axis and z-axis is parallel to the planar direction. A region of the rectangular solid of the following size including the artificial leather is trimmed from the rotated 3D image.

Side parallel to x-axis: 1.25 mm
Side parallel to y-axis: 1.25 mm
Side parallel to z-axis: 1.35 mm

(iii) A median filter is applied to the 3D image of the trimmed rectangular solid, under 2 pix radius conditions. (iv) The median filter-applied 3D image is partitioned into regions based on the Otsu method. The pixel brightness values are set with air (gaps between fibers) as 0, and the fibers and polyurethane composing the artificial leather as 255.

(v) In the region-partitioned 3D image, the pixels with brightness values of 255 are segmented by image processing, and connected structures having a pixel count (pix) of ≤10,000 for pixels with brightness value of 255 are removed as noise.

(vi) The noise-removed 3D image is cut at each 1 pix in the thickness direction (y-axis), each time photographing a 2D image parallel to the plane containing the x-axis and z-axis. The porosity of each photographed 2D image is determined by the following formula.

$$\text{Porosity (\%)} = (\text{Pixel count with brightness 0/total pixel count}) \times 100$$

(vii) Step (vi) was carried out for each 2D image to determine the porosity distribution.

The values specified in the following methods are calculated from the porosity distribution obtained from the 3D image of the artificial leather by X-ray CT.

(i) The artificial leather occupies the region between the two locations with 95% porosity in the porosity distribution (that is, the thickness of the artificial leather is the distance between the two points).

(ii) Of the two points, the point on the fiber layer (A) side is line segment A mentioned in (1-3) while the other point is line segment D, and the scrim structure range of the porosity distribution is determined from the scrim structure range B-C [%] calculated from the cross-sectional SEM image.

(iii) The minimum porosity of the maximum concave peak porosity in the scrim structure range in the porosity distribution of the artificial leather is the minimum porosity $\varepsilon_{Smin}$ of the scrim.

(iv) The maximum concave peak porosity in the range from the peak of the minimum porosity $\varepsilon_{Smin}$ in the scrim to the outer surface is the minimum porosity $\varepsilon_{Amin}$ of the fiber layer (A) of the artificial leather. With line segment A as 0% and the scrim structure range lower limit B as 100%, the relative location [%] of $\varepsilon_{Amin}$ between A and B is the relative location of $\varepsilon_{Amin}$ for fiber layer (A).

(v) The maximum porosity present from $\varepsilon_{Smin}$ to $\varepsilon_{Amin}$ is $\varepsilon_{A-Smax}$

(vi) The scrim structure range lower limit B [%] in the porosity distribution, the scrim structure range upper limit C [%], $\varepsilon_{Smin}$, $\varepsilon_{Amin}$, the relative location of $\varepsilon_{Amin}$ for the fiber layer (A) and $\varepsilon_{A-Smax}$ are determined as the arithmetic mean values (rounding to the first decimal place) of the measured values for three 3D images at 3 arbitrary locations of the sample.

[Dense feeling]

First, one arbitrary location of the artificial leather is cut to a size of 200 mm $\times$ 200 mm for use as a measuring sample. The outer surface of the sample was evaluated by five adult males and five adult females in good health (total of 10 evaluators) for visual and organoleptic evaluation, using the following 5-level evaluation scale. The average of the 10 evaluations (rounded to the first decimal place) was recorded as the grade for Dense feeling. Dense feeling of grade 3 to 5 is considered satisfactory (acceptable).

[Evaluation scale]

Grade 5: Very dense naps, very satisfactory outer appearance.
Grade 4: Evaluation between grade 5 and grade 3.
Grade 3: Uniform naps overall, leather-like outer appearance.
Grade 2: Evaluation between grade 3 and grade 1.
Grade 1: Mottled naps, poor outer appearance.

[Calculation of texture (stiffness)]

First, one arbitrary location of the artificial leather is cut to a size of 200 mm $\times$ 200 mm for use as a measuring sample. The measuring sample was set on a horizontal surface, and with the vertices of the square as A, B, C and D, the diagonally opposite vertex A and vertex C were overlauxiliary. Vertex A was set on the horizontal plane and vertex C was lauxiliary over vertex A. Next, with vertex C gradually receding from vertex A along the diagonal AC while in contact with the measuring sample, the point where vertex C separated from the measuring sample surface, was designated as point E, and the distance between point E and vertex C was defined as flexible value 1. Flexible value 2 was measured by the same procedure but replacing Vertex A with vertex B and vertex C with vertex D. The same measurement was carried out for five samples, and the arithmetic mean of the total of 10 points (rounded to the first decimal place) was recorded as the texture (stiffness) of the sample. A texture (stiffness) of 26 cm or less is considered satisfactory (acceptable).

[Evaluation of abrasion resistance]

A Martindale test (abrasive cloth: James H. Heal, "ABRASIVE CLOTH 1575W") is conducted by the method of JISL1096: Woven and knitted fabric test method 8.19.5 E (Martindale method). The conditions for the Martindale test were as follows.

Basis weight of 250 g/m$^2$ or greater: 50,000 abrasions, load: 12 kPa
Basis weight of lower than 250 g/m$^2$: 20,000 abrasions, load: 9 kPa.
The abraded surface of the test sample is then evaluated by 5 adult evaluators in good health, and evaluated visually according to the following 5-level evaluation scale.

[Evaluation scale]

Grade 5: No exposure of scrim on abraded surface, no visible pilling.
Grade 4: Evaluation between grade 5 and grade 3.
Grade 3: No exposure of scrim on abraded surface but visible abrasion on fiber layer.
Grade 2: Evaluation between grade 3 and grade 1.
Grade 1: Exposure of scrim on abraded surface.

The average value for the 15 points as the evaluation results by the 5 evaluators for the three samples (rounded to the first decimal place) was recorded as the abrasion resistance. An abrasion resistance of grade 3 to 5 is considered satisfactory (acceptable).

[Example 1]

Polyethylene terephthalate fibers with a single fiber mean diameter of 2.5 $\mu$m were produced by melt spinning and cut to lengths of 5 mm (the single fiber polyethylene terephthalate fibers cut to 5 mm lengths will hereunder be referred to as "PET ultrafine cut fibers"). The PET ultrafine cut fibers were dispersed in water and a fiber web (A') with a basis weight of 140 g/m$^2$ was produced by a papermaking method. The obtained fiber web (A') was sprayed with a high-speed water stream with a pressure of 4 MPa from the outer surface side using a straight-flow injection nozzle, and dried at 100°C using an air-through pin tenter dryer, to obtain fiber sheet (A").

By the same method, PET ultrafine cut fibers were dispersed in water to produce a fiber web (B') with a basis weight of 80 g/m$^2$ by a papermaking method, which was used as fiber layer (B) on the opposite side of the outer surface of the artificial leather.

A scrim (plain weave fabric) with a basis weight of 95 g/m$^2$ composed of 166 dtex/48f polyethylene terephthalate fibers was inserted between fiber sheet (A") and the fiber web (B'), forming a layered sheet composed of a three-layer structure.

Next, the layered sheet was sprayed with a high-speed water stream using a straight-flow injection nozzle at a pressure of 4 MPa on the outer surface side and 3 MPa from the opposite side of the outer surface, for integrated entangling of the fiber layer with the scrim, after which an air-through pin tenter dryer was used for drying at 100°C to obtain an entangled sheet composed of a three-layer structure.

The outer surface of the entangled sheet was then subjected to napping treatment using #400 emery paper.

The entangled sheet was impregnated with a water-dispersible polyurethane resin impregnating liquid having the composition shown in Table 1, and then a pin tenter dryer was used for heat-drying at 130°C, after which it was softened by soaking in hot water heated to 90°C, and the anhydrous sodium sulfate was extracted and removed by drying to obtain a sheet material filled with the water-dispersible polyurethane resin. The proportion of water-dispersed PU resin with respect to the total mass of the fibers of the sheet was 10 wt%.

The sheet material was then dyed with a blue disperse dye ("Blue FBL" by Sumitomo Chemical Co., Ltd.) to a dyeing density of 5.0% owf using a jet dyeing machine for 15 minutes at 130°C, and reduction cleaning was carried out. A pin tenter dryer was then used for drying at 100°C for 5 minutes to obtain artificial leather composed of a three-layer structure.

[Table 1]

| | Solid wt% with respect to impregnating liquid | Remark |
|---|---|---|
| "AE-12" (Nicca Chemical): Polyether-based water-dispersible polyurethane dispersion | 9.0 wt% | Mean primary particle size: 0.3 $\mu$m |
| Anhydrous sodium sulfate | 3.0 wt% | Impregnation auxiliary |

[Example 2]

Artificial leather composed of a three-layer structure was obtained by the same method as Example 1, except that the single fiber mean diameter of the polyethylene terephthalate fibers used in the fiber web (A') was 3.2 $\mu$m.

[Example 3]

Artificial leather composed of a three-layer structure was obtained by the same method as Example 1, except that the single fiber mean diameter of the polyethylene terephthalate fibers used in the fiber web (A') was 4.5 $\mu$m.

[Example 4]

Artificial leather composed of a three-layer structure was obtained by the same method as Example 1, except that the single fiber mean diameter of the polyethylene terephthalate fibers used in the fiber web (A') was 5.5 μm.

[Example 5]

Artificial leather composed of a three-layer structure was obtained by the same method as Example 1, except that the single fiber mean diameter of the polyethylene terephthalate fibers used in the fiber web (A') was 6.4 μm.

[Example 6]

Artificial leather composed of a two-layer structure was obtained by the same method as Example 1, except that the single fiber mean diameter of the polyethylene terephthalate fibers used in the fiber web (A') was 4.5 μm, and the layered sheet was composed of a two-layer structure without using fiber web (B').

[Example 7]

Using polyethylene terephthalate copolymerized with 8 mol% sodium 5-sulfoisophthalate as the sea component and polyethylene terephthalate as the island component, a sea-island composite fiber with a mean fiber diameter of 18 μm was obtained with a composite ratio of 20 mass% sea component and 80 mass% island component, and 16 islands/1f. The obtained sea-island composite fibers were cut to fiber lengths of 51 mm as staple fibers and passed through a card and cross lapper to form fiber web (A'). The obtained fiber web (A') was sprayed with a high-speed water stream with a pressure of 4 MPa from the front side using a straight-flow injection nozzle, and dried at 100°C using an air-through pin tenter dryer, and then immersed in a sodium hydroxide aqueous solution with a concentration of 10 g/L which had been heated to 95°C, and treated for 25 minutes to obtain fiber sheet (A") with the sea component of the sea-island composite fibers removed. The single fiber mean diameter of the fibers composing the fiber sheet (A") was 4.0 μm.
Polyethylene terephthalate fibers with a single fiber mean diameter of 2.5 μm were produced by melt spinning and cut to lengths of 5 mm. The PET ultrafine cut fibers were dispersed in water and a fiber web (B') with a basis weight of 80 g/m² was produced by a papermaking method.
A scrim (plain weave fabric) with a basis weight of 95 g/m² composed of 166 dtex/48f polyethylene terephthalate fibers was inserted between fiber sheet (A") and the fiber web (B'), forming a layered sheet composed of a three-layer structure.
The steps after formation of the layered sheet were carried out by the method of Example 1 to obtain an artificial leather composed of a three-layer structure.

[Example 8]

Artificial leather composed of a three-layer structure was obtained by the same method as Example 3, except that the fiber web (A') was sprayed with a high-speed water stream at a pressure of 6 MPa from the front side.

[Comparative Example 1]

Artificial leather composed of a three-layer structure was obtained by the same method as Example 1, except that the single fiber mean diameter of the polyethylene terephthalate fibers used in the fiber web (A') was 1.0 μm.

[Comparative Example 2]

Artificial leather composed of a three-layer structure was obtained by the same method as Example 1, except that the single fiber mean diameter of the polyethylene terephthalate fibers used in the fiber web (A') was 7.2 μm.

[Comparative Example 3]

Artificial leather composed of a three-layer structure was obtained by the same method as Example 3, except that the fiber web (A') was not subjected to a high-speed water stream using a straight-flow injection nozzle or drying, i.e. the layered sheet used was composed of a three-layer structure containing fiber web (A') instead of fiber sheet (A").

[Comparative Example 4]

Sea-island composite fibers were obtained using polyethylene as the sea component and nylon-6 as the island component and having a blending ratio of 50 mass% of the sea component and 50 mass% of the island component. The obtained sea-island composite fibers were cut to fiber lengths of 51 mm as staple fibers with an average size of 4 dtex, and passed through a card and cross lapper to form a fiber web, which was then needle-punched to obtain a fiber sheet.

The fiber sheet was then impregnated with a water-dispersible polyurethane resin impregnating liquid as shown in Table 2, and treated by moist heat coagulation at 100°C for 5 minutes, and a pin tenter dryer was used for hot air drying at 130°C to 150°C for 2 to 6 minutes to obtain a sheet material. The proportion of water-dispersed PU resin with respect to the total mass of the fibers of the sheet was 30 wt%.

The obtained sheet material was treated by immersion in toluene heated to a temperature of 85°C, as treatment for removal of the polyethylene as sea-component dissolution of the sea-island composite fibers. The single fiber mean diameter of the fibers composing the sheet material from which the sea-component dissolution was 0.2 $\mu$m.

The outer surface of the sheet material was then subjected to napping treatment using #400 emery paper, to obtain a sheet material with a basis weight of 300 g/m$^2$ having a napped surface.

The sheet material was dyed with a metal complexed dye using a Wince dyeing machine for 100 minutes at 60°C. A pin tenter dryer was then used for drying at 100°C for 5 minutes to obtain artificial leather having a single layer structure.

[Table 2]

|  | Solid wt% with respect to impregnating liquid | Remark |
|---|---|---|
| "AE-12" (Nicca Chemical): Polyether-based water-dispersible polyurethane dispersion | 15.0 wt% | Mean primary particle size: 0.3 $\mu$m |
| Anhydrous sodium sulfate | 3.0 wt% | Impregnation auxiliary |

[Comparative Example 5]

Artificial leather with a single layer structure was obtained by the same method as Comparative Example 4, except that the single fiber mean diameter of the fibers composing the sea component-removed sheet material was adjusted to 2.6 $\mu$m.

The physical properties of the artificial leathers obtained in Examples 1 to 8 and Comparative Examples 1 to 5 are shown in Table 3.

[Table 3]

| | Numb er of layers | Scrim | Void percentage [%] | | | Mean diameter of fiber layer (A) [um] | $\varepsilon_{Amin}$ relative position [%] | k-nearest neighbor ratio value [%] | Fiber | | Preliminary hydroentanglin g*1 | Interlacingwith laminated body*2 | Dense feeling (1-5) [grade] | Stiffnes s value [cm] | MD abrasion resistance (1-5) [grade] |
|---|---|---|---|---|---|---|---|---|---|---|---|---|---|---|---|
| | | | $\varepsilon_{Amin}$ | $\varepsilon_{A\text{-}Smax}$ | $\varepsilon_{Smin}$ | | | | | | | | | | |
| Example 1 | 3-layer | With | 53 | 73 | 61 | 2.5 | 81 | 46 | PET | Direct spinning | + | Hydroentangli ng | 5 | 22 | 3 |
| Example 2 | 3-layer | With | 57 | 73 | 61 | 3.2 | 74 | 49 | PET | Direct spinning | + | Hydroentangli ng | 5 | 23 | 4 |
| Example 3 | 3-layer | With | 60 | 75 | 60 | 4.5 | 69 | 52 | PET | Direct spinning | + | Hydroentangli ng | 4 | 24 | 4 |
| Example 4 | 3-layer | With | 64 | 78 | 60 | 5.5 | 63 | 60 | PET | Direct spinning | + | Hydroentangli ng | 4 | 25 | 5 |
| Example 5 | 3-layer | With | 68 | 82 | 61 | 6.4 | 55 | 64 | PET | Direct spinning | + | Hydroentangli ng | 3 | 26 | 5 |
| Example 6 | 2-layer | With | 58 | 82 | 59 | 4.5 | 47 | 48 | PET | Direct spinning | + | Hydroentangli ng | 5 | 23 | 3 |
| Example 7 | 3-layer | With | 66 | 78 | 60 | 4.0 | 67 | 82 | PET | Sea-island fibers | + | Hydroentangli ng | 4 | 25 | 3 |
| Example 8 | 3-layer | With | 52 | 73 | 61 | 4.5 | 88 | 44 | PET | Direct spinning | + (6 MPa) | Hydroentangli ng | 5 | 26 | 5 |
| Comp. Ex. 1 | 3-layer | With | 37 | 61 | 61 | 1.0 | 86 | 35 | PET | Direct spinning | + | Hydroentangli ng | 5 | 22 | 1 |
| Comp. Ex. 2 | 3-layer | With | 76 | 91 | 59 | 7.2 | 45 | 79 | PET | Direct spinning | + | Hydroentangli ng | 2 | >28 | 5 |
| Comp. Ex. 3 | 3-layer | With | 78 | 84 | 59 | 4.5 | 47 | 67 | PET | Direct spinning | - | Hydroentangli ng | 2 | 27 | 4 |
| Comp. Ex. 4 | 1-layer | Witho ut | 31 | - | - | 0.2 | 54 | 56 | Ny | Sea-island fibers | - | Needle punching | 5 | 24 | 1 |

EP 4 455 399 A1

20

| | Numb er of layers | Scrim | Void percentage [%] | | | Mean diameter of fiber layer (A) [um] | $\varepsilon_{Amin}$ relative position [%] | k-nearest neighbor ratio value [%] | Fiber | | Preliminary hydroentanglin g*1 | Interlacing with laminated body*2 | Dense feeling (1-5) [grade] | Stiffnes s value [cm] | MD abrasion resistance (1-5) [grade] |
|---|---|---|---|---|---|---|---|---|---|---|---|---|---|---|---|
| | | | $\varepsilon_{Amin}$ | $\varepsilon_{A-Smax}$ | $\varepsilon_{Smin}$ | | | | | | | | | | |
| Comp. Ex. 5 | 1-layer | Witho ut | 48 | - | - | 2.6 | 56 | 78 | Ny | Sea-island fibers | - | Needle punching | 3 | 24 | 2 |

*1 Carried out at 4 MPa water pressure, unless otherwise indicated
*2 Laminated body comprising at least fiber sheet (A") and scrim.

INDUSTRIAL APPLICABILITY

The artificial leather of the invention exhibits excellent levels for dense feeling on the outer surface, soft hand quality and abrasion resistance, and can therefore be satisfactorily used as an surface material or interior surface material for interiors, automobiles, aircraft or railway vehicles, or in a clothing product. More specifically, the artificial leather of the invention can be suitably used as an interior surface material with a very delicate outer appearance when used as an upholstery for furniture, chairs, wall materials, or for seats, headliners or interior for vehicle interiors of automobiles, electric railcars or aircraft, or as clothing materials used in parts of shirts, jackets, uppers or trims for shoes including casual shoes, sports shoes, men's shoes or women's shoes, or bags, belts and wallets, or even as industrial materials such as wiping cloths, abrasive cloths or CD curtains.

REFERENCE SIGNS LIST

MD Processing direction (machine direction)
CD Cross-machine (weft) direction
11 Entangled sheet
12 Scrim
13 Fiber layer (A)
14 Fiber layer (B)

**Claims**

1. Napped artificial leather comprising an entangled sheet and a polymer elastomer filling the entangled sheet, wherein:

   the entangled sheet has a construction of two or more layers composed of a fiber layer (A) on the front side of the napped artificial leather and a scrim contacting the fiber layer (A),
   the mean diameter of the fibers composing the fiber layer (A) is 2.0 $\mu$m to 7.0 $\mu$m, and when the porosity is measured in the thickness direction from the front side to the back side, the following formulas (1) to (3):

$$40 \le \varepsilon_{Amin} \le 70 \quad \text{formula (1)}$$

$$70 \le \varepsilon_{A\text{-}Smax} \le 90 \quad \text{formula (2)}$$

$$\varepsilon_{Smin} < \varepsilon_{A\text{-}Smax} \quad \text{formula (3)}$$

   are satisfied, where $\varepsilon_{Amin}$ (%) is the minimum porosity of the fiber layer (A), $\varepsilon_{Smin}$ (%) is the minimum porosity of the scrim, and $\varepsilon_{A\text{-}Smax}$ (%) is the maximum porosity present from the location of $\varepsilon_{Amin}$ (%) to the location of $\varepsilon_{Smin}$ (%).

2. The artificial leather according to claim 1, wherein the k-nearest neighbor ratio value of the fiber layer (A) is 10% to 80%.

3. The artificial leather according to claim 1 or 2, wherein the relative location of $\varepsilon_{Amin}$ as the minimum porosity of the fiber layer (A) is in the range of 20% to 95% in the thickness direction of the fiber layer (A), defining the relative location on the surface of the fiber layer (A) as 0% and the relative location at the border between the fiber layer (A) and the scrim as 100%.

4. The artificial leather according to claim 1 or 2, wherein the polymer elastomer is water-dispersible polyurethane.

5. The artificial leather according to claim 1 or 2, wherein the entangled sheet is composed of polyester fibers.

6. The artificial leather according to claim 1 or 2, wherein the entangled sheet has a structure with three layers comprising a fiber layer (A), a scrim contacting the fiber layer (A), and a fiber layer (B) contacting the scrim.

7. A method for producing napped artificial leather according to claim 1 or 2, the method comprising the following steps:

(1) a step of forming a fiber web (A') from fibers having a mean diameter of 2.0 $\mu$m to 7.0 $\mu$m;
(2) a step of pre-hydroentangling the obtained fiber web (A') to obtain a fiber sheet (A");
(3) a step of layering at least the fiber sheet (A") and scrim and integrating them by main hydroentangling to obtain an entangled sheet;
(4) optionally, a step of napping treatment of the outer surface of the obtained fiber sheet;
(5) a step of filling the obtained entangled sheet with a polymer elastomer to obtain a sheet material;
(6) a step of napping the outer surface of the sheet material obtained in step (5), when step (4) has not been carried out, or otherwise carrying out step (4) for additional napping treatment of the outer surface of the sheet; and
(7) a step of dyeing the obtained sheet material.

8. The method according to claim 7, wherein the water pressure for pre-hydroentangling in step (2) is 2 MPa to 4.5 MPa.

Fig. 1

# Fig. 2

Porosity distribution (for artificial leather with three-layer structure)

Ex. 1: Concave peak present in fiber layer (A)

Ex. 2: Concave peak absent in fiber layer (A)

# Fig. 3

# Fig. 4

# Fig. 5

Radius: 20 μm

Count in fiber cross-section
at fixed distance from a given fiber
cross-section position

Radius:
10 μm

# Fig. 6

Outer surface

Cross-section in thickness (t) direction

Sampling region 2    Artificial leather

Reverse side outer surface

Sampling region 1

y (t)

x (CD)

z (MD)

- Single fiber cross-section k-nearest neighbor ratio value (%)
- Single fiber average diameter (μm)
- Scrim structure range

EP 4 455 399 A1

## INTERNATIONAL SEARCH REPORT

| International application No. |
| --- |
| **PCT/JP2022/047137** |

**A. CLASSIFICATION OF SUBJECT MATTER**

*D06N 3/00*(2006.01)i; *B32B 5/26*(2006.01)i; *D06N 3/14*(2006.01)i
FI: D06N3/00; B32B5/26; D06N3/14

According to International Patent Classification (IPC) or to both national classification and IPC

**B. FIELDS SEARCHED**

Minimum documentation searched (classification system followed by classification symbols)

D06N1/00-7/06; B32B1/00-43/00; D04H1/00-18/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 57-191374 A (MITSUBISHI RAYON CO) 25 November 1982 (1982-11-25)<br>claims, p. 2, upper right column to lower left column, example 2 | 1-8 |
| X | WO 2008/013206 A1 (TRADIK CO., LTD.) 31 January 2008 (2008-01-31)<br>example 9 | 1-5, 7-8 |
| A | | 6 |
| A | JP 4-316653 A (MITSUBISHI PAPER MILLS LTD) 09 November 1992 (1992-11-09) | 1-8 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 March 2023** | **28 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/047137**

| Patent document cited in search report | | | Publication date (day/month/year) | Patent family member(s) | | | Publication date (day/month/year) |
|---|---|---|---|---|---|---|---|
| JP | 57-191374 | A | 25 November 1982 | (Family: none) | | | |
| WO | 2008/013206 | A1 | 31 January 2008 | US example 9 | 2009/0291250 | A1 | |
| | | | | EP | 2048280 | A1 | |
| JP | 4-316653 | A | 09 November 1992 | US | 5254399 | A | |
| | | | | EP | 491383 | A1 | |

Form PCT/ISA/210 (patent family annex) (January 2015)

**EP 4 455 399 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019112744 A
- JP 2009185430 A
- JP 2007204863 A